**Europäisches Patentamt**

**European Patent Office**

**Office européen des brevets**

(19)

(11) **EP 1 503 493 A2**

(12) **DEMANDE DE BREVET EUROPEEN**

(43) Date de publication:
**02.02.2005 Bulletin 2005/05**

(51) Int Cl.7: **H02P 3/22**

(21) Numéro de dépôt: **04356126.5**

(22) Date de dépôt: **07.07.2004**

(84) Etats contractants désignés:
**AT BE BG CH CY CZ DE DK EE ES FI FR GB GR
HU IE IT LI LU MC NL PL PT RO SE SI SK TR**
Etats d'extension désignés:
**AL HR LT LV MK**

(30) Priorité: **30.07.2003 FR 0309392**

(71) Demandeur: **POTAIN
F-69130 Ecully (FR)**

(72) Inventeur: **Dubois, Frédéric
42750 Saint Denis de Cabanne (FR)**

(74) Mandataire: **Bratel, Gérard et al
Cabinet Germain & Maureau,
BP 6153
69466 Lyon Cedex 06 (FR)**

(54) **Dispositif de commande de la résistance de freinage d'un convertisseur de fréquence**

(57) Le dispositif commande la résistance de freinage d'un convertisseur de fréquence (2) qui alimente un moteur électrique asynchrone (6) dans un appareil de levage, la résistance de freinage (7) étant intercalée sur un circuit de freinage (8) qui comporte aussi un commutateur de commande (9). Ce dispositif réalise la mesure de la tension moyenne d'alimentation (Ur) du convertisseur (2) et, à partir de cette mesure, le calcul de la tension de déclenchement du commutateur (9) ; il comporte des moyens de surveillance de l'état d'arrêt du moteur (6), qui déclenchent la mesure de la tension moyenne d'alimentation (Ur). L'invention s'applique entre autres aux grues à tour.

FIG1

EP 1 503 493 A2

# Description

La présente invention concerne un dispositif de commande de la résistance de freinage d'un convertisseur de fréquence, qui alimente au moins un moteur électrique asynchrone dans un appareil de levage, tel qu'une grue à tour. Cette invention vise, de façon générale, à protéger le moteur électrique contre les surtensions, dans certaines phases du mouvement commandé par ce moteur.

Actuellement, la commande d'un mouvement d'une grue à tour est généralement réalisée par l'association d'un moteur asynchrone triphasé et d'un convertisseur de fréquence. Les moteurs sont habituellement prévus pour fonctionner sous des valeurs de tension comprises entre 400 V ± 10 %, à une fréquence de 50 Hz, et 480 V ± 10 %, à une fréquence de 60 Hz.

Dans certaines phases de ce mouvement, les masses entraînées, telles que par exemple les charges levées par la grue, deviennent motrices ; les moteurs électriques fonctionnent alors comme des générateurs, et délivrent un couple de freinage. L'énergie alors produite par un moteur utilisé en frein est dissipée à l'aide d'une résistance dite résistance de freinage, insérée dans un circuit électrique dit "circuit de freinage", et mise en service par un commutateur commandé par une tension de seuil réglable.

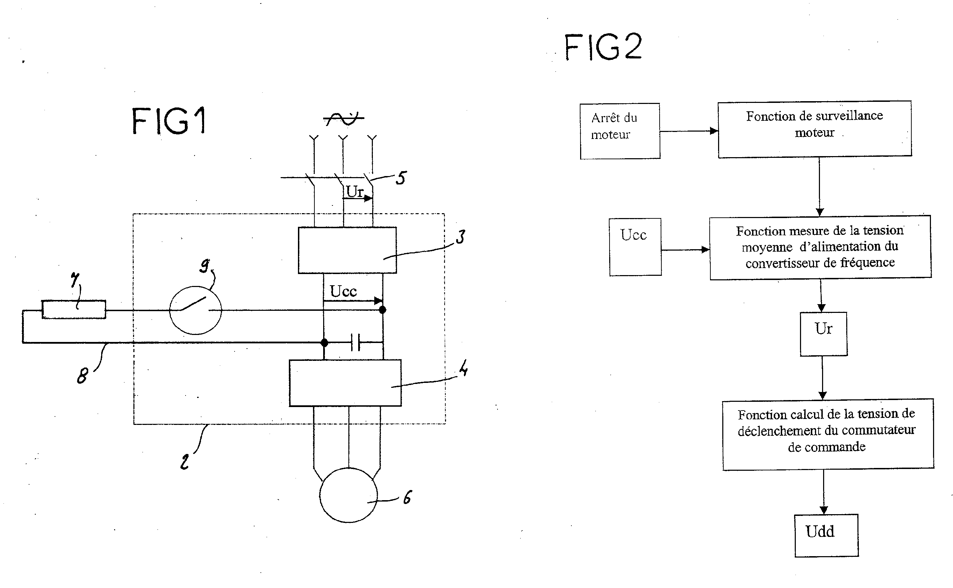

Cet état de la technique est illustré par le schéma électrique de la figure 1, sur laquelle la référence 2 désigne globalement le convertisseur de fréquence, qui comprend un redresseur 3 et un onduleur 4. Le redresseur 3 reçoit la tension triphasée de réseau Ur, qui constitue la tension d'alimentation du convertisseur de fréquence 2, par l'intermédiaire d'un contacteur 5 de mise sous tension. Le redresseur 3 fournit une tension continue Ucc, qui alimente l'onduleur 4, dont la sortie délivre un courant triphasé de fréquence adaptée, qui alimente le moteur électrique asynchrone 6 du mouvement concerné de l'appareil de levage. La résistance de freinage 7 est intercalée sur un circuit de freinage 8, en dérivation sur la partie du circuit du convertisseur de fréquence 2 alimentée par la tension continue Ucc. Un commutateur de commande 9, intercalé sur le circuit de freinage 8, met en service ou hors service la résistance de freinage 7.

La demande de brevet français publiée n° 2600469 (en particulier page 1, lignes 1 à 23 et page 2, lignes 2 à 16) expose un principe similaire, bien qu'appliqué aux ascenseurs et non aux appareils de levage du type grue à tour.

Cet état de la technique présente l'inconvénient suivant :

Le convertisseur de fréquence 2 engendre des surtensions, dont la valeur est fonction de la tension de seuil du commutateur de commande 9. Ces surtensions provoquent un vieillissement accéléré de l'isolant des bobinages du moteur électrique 6, et finalement la destruction de ce moteur. Lorsque le moteur électrique 6 fonctionne en générateur, la tension interne continue Ucc du convertisseur de fréquence augmente et, par conséquent, les surtensions augmentent, ce qui accélère le vieillissement du moteur 6.

L'invention vise à éviter cet inconvénient, par une solution technique simple et efficace, et elle a donc pour but premier d'augmenter la durée de vie des moteurs électriques d'appareils de levage, en limitant le vieillissement de l'isolant de leurs bobinages.

Un autre but de l'invention est de régler automatiquement à la valeur minimale le seuil de déclenchement du commutateur de commande du circuit de freinage, tout en limitant l'échauffement de la résistance de freinage.

A cet effet, l'invention a essentiellement pour objet un dispositif de commande de la résistance de freinage d'un convertisseur de fréquence, qui alimente au moins un moteur électrique asynchrone dans un appareil de levage, tel qu'une grue à tour, ladite résistance de freinage étant intercalée sur un circuit de freinage qui comporte aussi un commutateur de commande, le dispositif comprenant essentiellement, en combinaison :

-   des moyens de mesure de la tension moyenne d'alimentation du convertisseur de fréquence,
-   des moyens de calcul de la tension de déclenchement du commutateur de commande du circuit de freinage, à partir de la tension moyenne mesurée d'alimentation du convertisseur de fréquence, et
-   des moyens de surveillance de l'état de marche en moteur ou en générateur ou de l'état d'arrêt du moteur, ce dernier état déclenchant la mesure de la tension moyenne d'alimentation du convertisseur de fréquence.

Le dispositif objet de l'invention permet ainsi d'adapter la tension de déclenchement du commutateur de commande du circuit de freinage, de manière à interdire un fonctionnement du circuit de freinage, donc de la résistance de freinage, lorsque le moteur entraîne le mouvement, et à minimiser cette tension de déclenchement lorsque le moteur freine le mouvement, afin de limiter à leur valeur minimale les surtensions produites par le convertisseur.

Les moyens de mesure de la tension moyenne d'alimentation du convertisseur de fréquence sont avantageusement prévus pour effectuer un nombre entier N de mesures successives (Ucci) de la tension interne continue (Ucc) du convertisseur de fréquence, sur une durée T, les paramètres N et T étant de préférence réglables, et pour déduire la tension moyenne d'alimentation du convertisseur de fréquence (Ur) à partir des N mesures effectuées de la tension interne continue du convertisseur de fréquence, par la formule :

$$Ur = \left[\sum_{i=1}^{i=N} Ucc_i\right] / N / \sqrt{2}$$

Cette tension moyenne Ur est transmise aux moyens de calcul de la tension de déclenchement du commutateur de commande du circuit de freinage, lesquels sont avantageusement prévus pour déduire la tension de déclenchement dudit commutateur par la formule :

$$Udd = Ur \cdot \sqrt{2} + delta$$

dans laquelle "delta" est une marge nécessaire pour garantir que le commutateur de commande du circuit de freinage se ferme uniquement lorsque le moteur fonctionne en générateur.

Le fonctionnement du dispositif de commande de la résistance de freinage d'un convertisseur de fréquence, objet de l'invention, est illustré par l'organigramme de la figure 2, qui reprend les notations Ucc, Ur et Udd précédemment définies, et qui explicite les fonctions réalisées, de sorte qu'il n'appelle aucun commentaire particulier.

A titre d'illustration complémentaire de l'invention, sans caractère limitatif, on indique ci-après un exemple numérique.

La marge "delta" est par exemple fixée à 40 V.

Trois tensions continues successivement mesurées du convertisseur de fréquence peuvent être :

Ucc1 = 560 V
Ucc2 = 565 V
Ucc3 = 570 V

La tension d'alimentation du convertisseur de fréquence, déterminée par application de la première des deux formules ci-dessus, est :

Ur = (560 + 565 + 570) / 3 / $\sqrt{2}$ = 400 V

La tension de seuil du commutateur de commande du circuit de freinage, déduite par application de la seconde formule ci-dessous, est :

Udd = (400 x $\sqrt{2}$) + 40 = 605 V

L'on ne s'éloignerait pas du cadre de l'invention, telle que définie dans les revendications annexées, en mesurant la tension d'alimentation Ur directement, et non en la calculant, ou en utilisant le même dispositif sur tout appareil de levage, autre que grue à tour, dont les masses entraînées ou déplacées peuvent être motrices dans certaines phases des mouvements commandés.

**Revendications**

**1.** Dispositif de commande de la résistance de freinage d'un convertisseur de fréquence (2), qui alimente au moins un moteur électrique asynchrone (6) dans un appareil de levage, tel qu'une grue à tour, ladite résistance de freinage (7) étant intercalée sur un circuit de freinage (8) qui comporte aussi un commutateur de commande (9), **caractérisé en ce qu'**il comprend, en combinaison :

-   des moyens de mesure de la tension moyenne d'alimentation (Ur) du convertisseur de fréquence (2),
-   des moyens de calcul de la tension de déclenchement (Udd) du commutateur de commande (9) du circuit de freinage (8), à partir de la tension moyenne mesurée d'alimentation (Ur) du convertisseur de fréquence (2), et
-   des moyens de surveillance de l'état de marche en moteur ou en générateur ou de l'état d'arrêt du moteur (6), ce dernier état déclenchant la mesure de la tension moyenne d'alimentation (Ur) du convertisseur de fréquence (2).

**2.** Dispositif selon la revendication 1, **caractérisé en ce que** les moyens de mesure de la tension moyenne d'alimentation (Ur) du convertisseur de fréquence (2) sont prévus pour effectuer un nombre entier (N) de mesures successives (Ucci) de la tension interne continue (Ucc) du convertisseur de fréquence (2), sur une durée (T), les paramètres (N et T) étant de préférence réglables, et pour déduire la tension moyenne d'alimentation (Ur) du convertisseur de fréquence (2) à partir des N mesures effectuées de la tension interne continue du convertisseur de fréquence (2), par la formule :

$$Ur = \left[\sum_{i=1}^{i=N} Ucc_i\right] / N / \sqrt{2}$$

**3.** Dispositif selon la revendication 1 ou 2, **caractérisé en ce que** les moyens de calcul de la tension de déclenchement (Udd) du commutateur de commande (9) du circuit de freinage (8) sont prévus pour déduire la tension de déclenchement dudit commutateur (9) par la formule :

$$Udd = Ur \cdot \sqrt{2} + delta$$

dans laquelle "delta" est une marge nécessaire pour garantir que le commutateur de commande (9) du circuit de freinage (8) se ferme uniquement lorsque le moteur (6) fonctionne en générateur.

# FIG1

# FIG2

| | |
|---|---|
| Arrêt du moteur | Fonction de surveillance moteur |

Ucc → Fonction mesure de la tension moyenne d'alimentation du convertisseur de fréquence

Ur

Fonction calcul de la tension de déclenchement du commutateur de commande

Udd

EP 1 503 493 A2